# EUROPÄISCHE PATENTSCHRIFT

(11) **EP 3 960 611 B1**
(45) Veröffentlichungstag und Bekanntmachung des Hinweises auf die Patenterteilung: **24.05.2023**
(21) Anmeldenummer: 21020518.3
(22) Anmeldetag: 19.12.2016
(51) Int. Cl.: B62M 9/10

(54) **ANTRIEBSANORDNUNG EINES FAHRRADES MIT EINER MEHRFACH-KETTENRADANORDNUNG**
DRIVE ARRANGEMENT OF A BICYCLE WITH A MULTIPLE-CHAIN WHEEL ASSEMBLY
SYSTÈME D'ENTRAÎNEMENT D'UN VÉLO COMPRENANT UN SYSTÈME DE PLATEAU DE PÉDALIER MULTIPLE

(30) Priorität: 23.12.2015 DE 102015016767
(43) Veröffentlichungstag der Anmeldung: 02.03.2022
(62) Teilanmeldung aus: 16002698.5
(73) Patentinhaber: SRAM Deutschland GmbH, 97424 Schweinfurt (DE)
(72) Erfinder: Braedt, Henrik, 97456 Dittelbrunn/OT Hambach (DE)

(56) Entgegenhaltungen:
- DE-A1-102015 006 582
- US-A- 5 716 297

## Beschreibung

Die vorliegende Erfindung betrifft eine Antriebsanordnung eines Fahrrades mit einer Mehrfach-Kettenradanordnung für eine Hinterradnabe des Fahrrades mit verbesserten Umschalteigenschaften, reduzierten Vibrationen bei Schräglauf der Antriebskette und verbessertem Verschleißverhalten, die insbesondere für den Betrieb bei überdurchschnittlich hohen Antriebslasten optimiert ist.

In dem Dokument DE 10 2012 023 819 A1 ist ein vorderes Kettenrad zur Anbringung an einer Tretkurbel eines Fahrrads beschrieben, das sich durch eine verbesserte Kettenführung gegenüber konventionellen Kettenrädern auszeichnet. Die verbesserten Führungseigenschaften ermöglichen, dass bei einem Einsatz eines einzigen solchen Kettenrades an einer Tretkurbel eines Fahrrades auf zusätzliche Kettenführungen verzichtet werden kann. Dies gilt auch dann, wenn keine Kettenführung eines Kettenwerfers vorhanden ist. Diese Eigenschaft ist besonders bei solchen Fahrrädern von entscheidendem Vorteil, die im Gelände eingesetzt werden und bei denen infolge von Geländeunebenheiten und bei starken Lenkbewegungen die Kette dazu neigt, vom Kettenrad abzuspringen. Die verbesserten Führungseigenschaften werden vor allem dadurch erreicht, dass das Kettenrad in Achsrichtung der Tretkurbel betrachtet dicke und dünne Zähne aufweist, die in Umfangsrichtung alternierend angeordnet sind.

Weiterhin können diese Zähne in radialer Richtung besonders lang ausgebildet sein, wobei die Zahnlücken gegenüber den aufgenommenen Kettenrollen in Umfangsrichtung nur unbedeutend größer ausgebildet sein können. Außerdem ist es möglich, Freiräume vorzusehen, um den gegenüber den Kettenrollen überstehenden Innenlaschen der Kette Raum zu bieten.

An einer rechten Tretkurbel ist bei diesem Stand der Technik jeweils nur eines dieser Kettenräder angeordnet, so dass auf einen vorderen Kettenwerfer verzichtet werden kann. Somit entfällt die Notwendigkeit, die Antriebs-Rollenkette im Lasttrum auf ein benachbartes Kettenrad umzulegen, was normalerweise infolge der im Lasttrum vorliegenden Kettenzugkräfte hohe Anforderungen stellt. Für den Einsatz an einer Hinterradnabe sind die genannten Kettenräder ungeeignet, weil die außerordentlich guten Kettenführungseigenschaften einem Umlegen auf ein benachbartes Kettenrad entgegenstehen.

Ähnliche Kettenradanordnungen, die zur Anbringung an der Tretkurbel vorgesehen und beschrieben sind, sind auch aus den später veröffentlichten Patentanmeldungen US 2014/0338494 A1, DE 10 2014 019 528 A1, DE 10 2015 006 582 A1 und DE 10 2015 000 715 A1 bekannt. All diese Dokumente zeigen vordere Kettenräder mit unterschiedlich ausgestalteten Zähnen, wobei es bei diesen Ausgestaltungen insbesondere um eine stabile Kettenführung geht. Dokument US5716297A zeigt die Präambel des Anspruchs 1.

Schaltvorgänge an Mehrfach-Kettenradanordnungen einer Tretkurbel und damit verbundene Anforderungen unterscheiden sich jedoch wesentlich von denen einer Mehrfach-Kettenradanordnung für eine Hinterradnabe eines Fahrrads. Im Falle eines treibenden Kettenrades (an der Tretkurbel) wird die Kettenrolle jeweils von der Lastflanke des Kettenrades aufgenommen. Die Antriebsrichtung gibt vor, dass der Schaltvorgang im Lasttrum erfolgen muss. Bei einem Abtriebskettenrad, beispielsweise einem Ritzel einer an einem Fahrradhinterrad angebrachten Mehrfach-Kettenradanordnung, läuft die Kettenrolle jeweils auf oder nahe der Einlaufflanke im Leertrum des Antriebes ein. Die Kettenführung erfolgt durch die Schaltwerkzahnrolle, so dass die Einlaufsituation auf das betreffende Kettenrad keinen wesentlichen Schräglauf erfährt. Daraus ergeben sich vollkommen unterschiedliche Aufgabenstellungen für das Schalten und das Führen der Kette für ein hinteres Kettenrad (Ritzel) am Hinterrad eines Fahrrads und ein vorderes Kettenrad an der Tretkurbel.

Von erheblicher Bedeutung ist das Schaltverhalten bei Mehrfach-Kettenradanordnungen unter hohen Antriebslasten in der Antriebsanordnung. Hohe Antriebslasten können bei Mehrfach-Kettenradanordnungen für eine Hinterradnabe eines Fahrrads beispielsweise beim Einsatz im Hochleistungssport bei austrainierten professionellen oder semiprofessionellen Fahrern auftreten. Durch die zunehmende Verbreitung von durch einen Elektroantrieb unterstützten Mountainbikes werden derartig überdurchschnittlich hohe Lasten jedoch auch von weniger trainierten Fahrern erreicht. Bei sportlichem Einsatz dieser elektrounterstützten Räder werden die bei Hochleistungssportlern auftretenden Betriebslasten sogar deutlich übertroffen.

Der Trend bei diesen Mehrfach-Kettenradanordnungen geht hin zu einer hohen Übersetzungsbandbreite mit zum Teil großen Übersetzungssprüngen zwischen benachbarten Kettenrädern. Dies bedeutet, dass zum Teil ungewöhnlich hohe Unterschiede der Zähnezahlen zwischen zwei benachbarten Kettenrädern vorliegen. Wenn in diesem Zusammenhang der Begriff Kettenräder verwendet wird, so betrifft dieser im Rahmen der Beschreibung der vorliegenden Erfindung Kettenräder, die an Hinterradnabe eingesetzt werden und die im Fachjargon auch als Ritzel bezeichnet werden. Bezüglich der Lastschaltbarkeit von einem größeren auf ein kleineres Kettenrad, einem sogenannten outboard-Schaltvorgang, ergibt sich bei großen Übersetzungssprüngen das Problem der zunehmend abweichenden Tangentialbedingung zweier benachbarter Schaltpositionen. Dies bedeutet, dass aufgrund des großen Übersetzungssprunges die Kette im Bereich ihres freien Trums nicht tangential vom größeren auf das kleinere Kettenrad aufläuft. Bei herkömmlichen Mehrfach-Kettenradanordnungen werden üblicherweise zwei bestimmte benachbarte Zähne ausgewählt, um Vorkehrungen für ein Umschalten von dem größeren Kettenrad auf das kleinere Kettenrad zu realisieren. Im Gegensatz zum Schalten von einem kleineren Kettenrad auf ein größeres Kettenrad, einem sogenannten inboard-Schaltvorgang, ist es bei einem outboard-Schaltvorgang nicht möglich, die gleiche Abstiegsposition für eine Innenlasche oder eine Außenlasche der Antriebskette vorzusehen. Vielmehr gelingt der Abstieg der Kette von dem größeren Kettenrad auf das kleinere Kettenrad zuverlässig nur an einer Ketteninnenlasche.

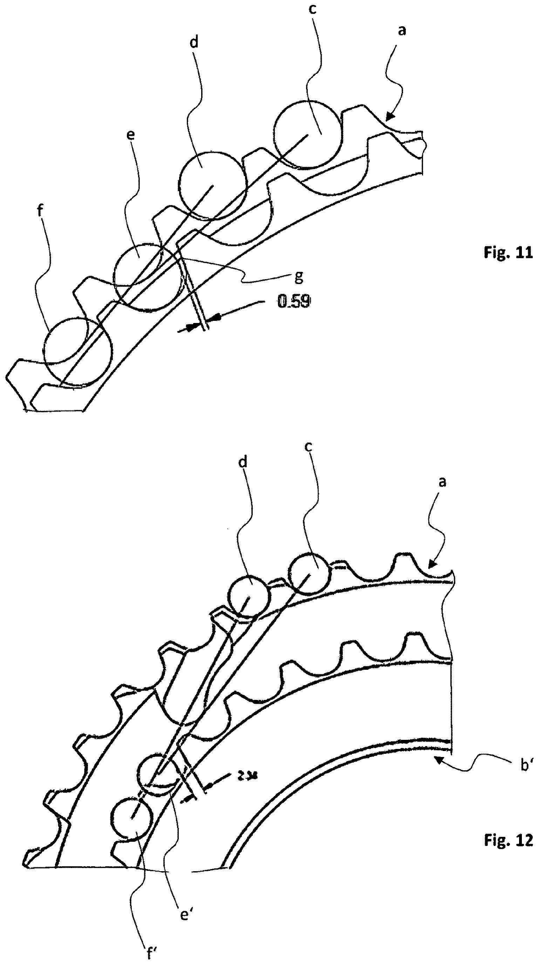

Die Figuren 11 und 12 dienen zur Erläuterung des Problems. Figur 11 zeigt die Situation für einen verhältnismäßig kleinen Übersetzungssprung von einem durchmessergrößeren Kettenrad a mit 40 Zähnen auf ein durchmesserkleineres Kettenrad b mit 38 Zähnen. Die beiden Kettenrollen c und d befinden sich noch auf dem größeren Kettenrad a, während die beiden Kettenrollen e und f bereits auf dem kleineren Kettenrad liegen. Sobald die Kette aus dem größeren Kettenrad ausläuft, wird eine freie Kettenlänge bereitgestellt und es kommt zu einer Kraftunterbrechung zwischen Antrieb und Abtrieb. Der Zahlenwert 0,59 mm entspricht der Abweichung von der Tangentialbedingung. Dies bedeutet, dass die Antriebskette mit der Kettenrolle e nicht ideal in das kleinere Kettenrad b einläuft, sondern um 0,59 mm von der Lastflanke beabstandet ist, so dass die Kettenrolle e nicht an der Lastflanke g des kleineren Kettenrads b anliegt. Es kommt also wegen dieses Abstandes zunächst zu keiner Kraftübertragung.

Während bei kleineren Übersetzungssprüngen derartige Verhältnisse noch tolerierbar sind, wird dieser Effekt der Abweichung von der Tangentialbedingung bei größeren Übersetzungssprüngen, d.h. bei einem Umlegen der Antriebskette von dem Kettenrad a auf ein deutlich kleineres Kettenrad b' verstärkt, wie in Figur 12 dargestellt. In dieser Situation, bei der das Kettenrad a wiederum 40 Zähne aufweist und das Kettenrad b' 32 Zähne aufweist, ist der Weg der freien Kettenlänge erheblich länger und macht sich entsprechend der Übersetzung für den Fahrer durch "freien Fall" am Pedal deutlich bemerkbar. Man erkennt, dass die Kettenrolle e' in dieser Situation in erheblichem Abstand auf das Kettenrad b' trifft. Der Zahlenwert beträgt in diesem Fall 2.34 mm, d. h die Kettenrolle e' wäre um einen Abstand von 2.34 mm von der Lastflanke entfernt. Eine Kraftübertragung ist in einer derartigen Situation zunächst verhältnismäßig lange nicht möglich. Die Kette läuft zunächst weitgehend widerstandsfrei, bis ein schlagartiger Kontakt zwischen Kettenrolle e' und Lastflanke eintritt. Bei motorunterstützen Fahrrädern aber auch bei Sprintsituationen im Leistungssport kann diese Situation durch ruckartig auftretende Lastspitzen zu ernsthaften Schäden im Antriebsstrang führen, was als Ergebnis ein Verbiegen des Kettenrads, ausgebrochene Zähne, Kettenrisse, Kettenabwürfe, Getriebeschäden am E-Motor oder dergleichen mit sich bringen kann.

Eine Aufgabe der vorliegenden Erfindung besteht darin, eine Antriebsanordnung eines Fahrrades mit einer Mehrfach-Kettenradanordnung für eine Hinterradnabe des Fahrrads bereitzustellen, die auch unter hohen Antriebslasten ein präzises Umschalten der Antriebskette ermöglicht und im Betrieb ein verbessertes Verschleißverhalten und eine geringe Neigung zu Vibrationen zeigt.

Gelöst wird diese Aufgabe durch eine Mehrfach-Kettenradanordnung für eine Hinterradnabe eines Fahrrades mit den Merkmalen des Anspruchs 1.

Bevorzugte Ausführungsformen werden aus den Ansprüchen 2 bis 6 ersichtlich.

Insbesondere wird die vorstehend genannte Aufgabe gelöst durch eine Antriebsanordnung eines Fahrrades mit einer Mehrfach-Kettenradanordnung für eine Hinterradnabe des Fahrrades, wobei die Mehrfach-Kettenradanordnung eine Mehrzahl an Kettenrädern mit unterschiedlichen Durchmessern umfasst, wobei die Kettenräder jeweils eine Mehrzahl von durch Zahnzwischenräume getrennten Zähnen aufweist, die mit einer Antriebskette mit wechselweise aufeinander folgenden breiten und schmalen Kettengliedern in Eingriff bringbar sind, wobei an wenigstens einem Kettenrad ein Korrekturmittel vorgesehen ist, das derart ausgebildet ist, dass die Antriebskette bezüglich ihrer breiten und schmalen Kettenglieder bei einem Umlauf um ein ausgewähltes Kettenrad oder bei einem Kettenradwechsel von einem Ausgangskettenrad auf ein ausgewähltes Kettenrad in einer vorbestimmten Kettenlaschen-Ausrichtung relativ zu den Zähnen des ausgewählten Kettenrads ausgerichtet wird.

Durch die vorliegende Erfindung wird also durch Anbringung des Korrekturmittels gezielt eine Kettenlaschen-Ausrichtung erreicht, sodass die eingangs mit Bezug auf Fig. 11 und 12 gezeigten Zustände vermieden werden und stattdessen ein präzises Umlegen der Kette auch bei großen Übersetzungssprüngen möglich ist. Darüber hinaus wird mit der vorliegenden Erfindung angestrebt, eine vorbestimmte Kettenlaschen-Ausrichtung auch für den Fall zu erreichen, bei dem die Kette um ein ausgewähltes Kettenrad umläuft. Dies ist beispielsweise dann erforderlich, wenn am Umfang eines Kettenrads ein Zahn vorgesehen ist, der aufgrund seiner Position oder Gestaltung nur in den Zwischenraum eines breiten Kettengliedes eindringen kann, in den Zwischenraum eines schmalen Kettengliedes jedoch nicht vollständig hineinpasst. Hierfür kann gemäß einer Weiterbildung der Erfindung vorgesehen sein, dass am Umfang eines Kettenrads in Umfangsrichtung betrachtet wenigstens eine Folge von Zähnen vorgesehen ist, wobei wenigstens einer der Zähne dieser Folge für einen bevorzugten Eingriff in den Zwischenraum der schmalen Kettenglieder oder für einen bevorzugten Eingriff in den Zwischenraum der breiten Kettengliedern ausgebildet ist, wobei die Folge von Zähnen dazu ausgebildet ist, die Kette korrigierend auszurichten, so dass der wenigstens eine Zahn in den bevorzugten Eingriff in den Zwischenraum der schmalen Kettenglieder oder in den bevorzugten Eingriff in den Zwischenraum der breiten Kettengliedern gelangt. Mit anderen Worten wird in einer solchen Situation durch das Korrekturmittel erreicht, dass die Antriebskette auf dem Kettenrad um die Distanz eines Kettengliedes korrigierend verlagert wird, um die gewünschte Kettenlaschen-Ausrichtung relativ zu dem betreffenden Kettenrad zu erreichen.

Eine Weiterbildung der Erfindung sieht vor, dass bei einem Kettenradwechsel von einem Ausgangskettenrad auf ein ausgewähltes Kettenrad die Folge von Zähnen einen ersten Zahn aufweist, dessen Zahngrund den Fußkreis des betreffenden Kettenrads tangiert oder radial außerhalb des Fußkreises liegt, wobei wenigstens ein auf den ersten Zahn folgender weiterer Zahn mit seinem Zahngrund radial innerhalb des Fußkreises des Kettenrades liegt. Mit anderen Worten wird gemäß dieser Ausführungsvariante der Erfindung die Kette durch die Folge von Zähnen auf dem Kettenrad in radialer Richtung weiter einwärts geführt, als dies eigentlich durch den Fußkreis des betreffenden Kettenrades vorgegeben wäre. Dadurch wird der von der Antriebskette beim Umlegen von dem großen Kettenrad auf das nächst kleinere Kettenrad zurückzulegende Weg, in dem ein Teil der Kette frei ohne Kettenradeingriff verläuft, verkürzt. Insbesondere bei Ritzelkombinationen mit asymmetrischer Schaltgassenanordnung kann so ein zuverlässiger lastübertragender Eingriff der betreffenden Kettenrolle an dem betreffenden Zahn des kleineren Kettenrads gewährleistet werden.

Bei dieser Weiterbildung der Erfindung kann ferner vorgesehen sein, dass die Folge von Zähnen eine Mehrzahl von weiteren Zähnen umfasst, deren Zahngrund radial innerhalb des Fußkreises des Kettenrades liegt. Dadurch lässt sich auch bei großen Übersetzungssprüngen ein hinsichtlich der Kettenlaschen-Ausrichtung auf das kleinere Kettenrad optimiertes Umlegen der Kette erzielen.

Insbesondere kann in diesem Zusammenhang vorgesehen sein, dass die weiteren, mit ihrem Zahngrund radial innerhalb des Fußkreises liegenden Zähne der Folge von Zähnen mit zunehmendem Abstand vom ersten Zahn in Umfangsrichtung betrachtet zunehmend weiter radial einwärts innerhalb des Fußkreises des betreffenden Kettenrades angeordnet sind. Mit anderen Worten kann der Verlauf der Kette schrittweise immer weiter radial einwärts verlegt werden.

In diesem Zusammenhang sieht eine Weiterbildung der Erfindung vor, dass auf den letzten weiteren, mit seinem Zahngrund radial innerhalb des Fußkreises liegenden Zahn der Zahnfolge in Umfangsrichtung betrachtet ein Zahn folgt, der mit seinem Zahngrund den Fußkreis des Kettenrades tangiert oder radial außerhalb des Fußkreises liegt.

Vorzugsweise kann in diesem Zusammenhang ferner vorgesehen sein, dass benachbart zu dem letzten weiteren, mit seinem Zahngrund radial innerhalb des Fußkreises liegenden Zahn der Zahnfolge an dem Kettenrad eine Frontausnehmung zur Ausbildung einer Schaltgasse vorgesehen ist. Hierauf wird im Folgenden noch im Detail eingegangen.

Zusätzlich oder alternativ zu der Ausführungsform mit einem teilweise reduzierten Fußkreisdurchmesser kann erfindungsgemäß ferner vorgesehen sein, dass das ausgewählte Kettenrad wenigstens einen Aufreitzahn umfasst, der aufgrund seiner Geometrie oder/und seiner Anordnung am Kettenrad derart ausgebildet ist, dass im Falle eines Eingriffs in einen Zwischenraum eines schmalen Kettenglieds, das schmale Kettenglied in seinem Zwischenraum den Aufreitzahn nicht vollständig aufnehmen kann, sodass das schmale Kettenglied auf dem Aufreitzahn nach radial außen versetzt aufsitzt. Diese Variante wird gewählt, um sicherzustellen, dass die Antriebskette mit ihren wechselweise aufeinanderfolgenden breiten und schmalen Kettengliedern in einer vorbestimmten Kettenlaschen-Ausrichtung mit dem ausgewählten Kettenrad zum Eingriff kommt. Weist das ausgewählte Kettenrad beispielsweise zum Zweck einer verbesserten Antriebsketten-Führung beim regulären Kettenumlauf oder zum Umschalten wenigstens einen Zahn auf, der in seiner axialen Erstreckung breiter ist als die Breite eines schmalen Kettenglied-Zwischenraums, so kann dieser Zahn nicht vollständig in einen schmalen Kettenglied-Zwischenraum eindringen. Stattdessen liegt das schmale Kettenglied auf diesem breiten Zahn obenauf, was an sich hinsichtlich einer Kraftübertragung unvorteilhaft ist und ein Abrutschen der Kette verursachen kann. Dieser an sich unerwünschte Effekt kann aber erfindungsgemäß vorteilhaft dazu genutzt werden, die Kette gezielt hinsichtlich ihrer Kettenlaschen-Ausrichtung um die Distanz eines Kettenglieds auszurichten, sodass das schmale Kettenglied auf diesem breiten Zahn abrutscht und in der Folge das darauffolgende breite Kettenglied mit diesem breiten Zahn, dem Aufreitzahn, in Eingriff kommt. In diesem Zusammenhang ist vorzugsweise erfindungsgemäß vorgesehen, dass der Aufreitzahn in seiner Geometrie und Anordnung derart ausgebildet ist, dass er ein breites Kettenglied in seinem Zwischenraum den Aufreitzahn vollständig aufnehmen kann.

Eine Weiterbildung der Erfindung sieht vor, dass der Aufreitzahn in seiner Geometrie und Anordnung derart ausgebildet ist, dass bei einem Eingreifen in ein schmales Kettenglied entgegen der Drehrichtung folgende Ketten-Gelenkpunkte radial weiter außerhalb eines Teilkreises positioniert werden, als in einem Fall, in dem der Aufreitzahn vollständig in ein breites Kettenglied eingreift.

Ferner kann erfindungsgemäß vorgesehen sein, dass die Folge von Zähnen eine Mehrzahl von Aufreitzähnen umfasst, wobei zwischen zwei Aufreitzähnen jeweils ein Zahn vorgesehen ist, der in seiner Geometrie und Anordnung derart ausgebildet ist, dass ein schmales Kettenglied in seinem Zwischenraum diesen zwischen zwei Aufreitzähnen angeordneten Zahn vollständig aufnehmen kann. Durch diese Maßnahme kann die Kette über einen längeren Antriebskettenabschnitt auf dem betreffenden Kettenrad nach radial außen verlagert werden, um so eine gewünschte Kettenlaschen-Ausrichtung zu erreichen.

In diesem Zusammenhang ist es erfindungsgemäß ferner möglich, dass die Zahnfolge derart ausgebildet ist, dass die Kette über einen hinreichend langen Kettenabschnitt nach radial außen verlagert wird, so dass es zu einem synchronisierenden kontrollierten Überspringen der Kette um die Distanz eines Kettengliedes kommt.

Um bei diesem Vorgang zu verhindern, dass die Kette in axialer Richtung vom Ritzel abgleitet, kann der Aufreitzahn und/oder auch weitere Zähne mit einen dachförmig ausgeprägtem Zahnkopf gestaltet werden.

Eine Ausführungsvariante der Erfindung sieht vor, dass die Zahnfolge wenigstens 3, vorzugsweise wenigstens 5 Aufreitzähne aufweist.

Erfindungsgemäß ist es möglich, dass der Aufreitzahn in axialer Richtung versetzt ist. Mit anderen Worten muss der Aufreitzahn nicht zwingend mit größerer Materialstärke ausgeführt sein, sondern kann allein durch eine versetzte Positionierung verhindern, dass eine schmale Kettenlasche mit ihrem Kettenlaschen-Zwischenraum den axial versetzten Aufreitzahn vollständig in sich aufnimmt. Wie vorstehend bereits angedeutet ist es alternativ hierzu möglich, dass der Aufreitzahn in axialer Richtung einen Vorsprung aufweist oder verdickt ausgebildet ist.

Ferner kann erfindungsgemäß vorgesehen sein, dass der wenigstens eine Aufreitzahn nahe einer Frontausnehmung des Kettenrads zur Ausbildung einer Schaltgasse ausgebildet ist. Wiederum sei auf die später folgenden detaillierten Erläuterungen bezüglich des Vorsehens einer Schaltgasse verwiesen.

Zusätzlich oder alternativ zu den vorstehend geschilderten Erfindungsvarianten ist es gemäß einer Ausführungsform der Erfindung ferner möglich, dass ein zu dem ausgewählten Kettenrad benachbartes durchmessergrößeres Kettenrad der Kettenradanordnung an seiner Frontfläche mit wenigstens einer Aufreitformation ausgebildet ist, wobei die Aufreitformation derart ausgebildet ist, dass die Antriebskette nur in einer vorbestimmten Kettenlaschen-Ausrichtung relativ zu den Zähnen des ausgewählten Kettenrads ausgerichtet wird. Mit anderen Worten wird das Aufreiten der Antriebskette, d.h. das Verlagern der Antriebskette nach radial außen, um diese hinsichtlich ihrer Kettenlaschen in Antriebsketten-Längsrichtung auszurichten, dadurch erreicht, dass die Antriebskette mit dem benachbarten durchmessergrößeren Kettenrad in Wechselwirkung tritt.

Dies kann beispielsweise dadurch erreicht werden, dass die Aufreitformation in Form wenigstens eines Aufreitvorsprungs ausgebildet ist, der in axialer Richtung von der Frontfläche des durchmessergrößeren Kettenrads vorspringt, wobei die Antriebskette mit einer Lasche eines breiten Kettenglieds radial auf dem Aufreitvorsprung aufliegt und dabei an einem vollständigen Eingriff mit dem benachbarten ausgewählten Kettenrad gehindert wird, wenn sich die Antriebskette nicht in der vorbestimmten Kettenlaschen-Ausrichtung relativ zu den Zähnen des ausgewählten Kettenrads befindet. Es kann erfindungsgemäß auch eine Mehrzahl von Aufreitvorsprüngen vorgesehen sein, um die Antriebskette über einen längeren Kettenabschnitt, der sich über mehrere Kettenglieder hinweg erstreckt, nach radial auswärts zu verlagern.

In einer Weiterbildung der Erfindung kann vorgesehen sein, dass der Aufreitvorsprung derart an dem durchmessergrößeren Kettenrad angeordnet ist, dass bei einem radialen Aufliegen eines Kettenglieds der Antriebskette auf dem Aufreitvorsprung entgegen der Drehrichtung des Kettenrades folgende Ketten-Gelenkpunkte radial weiter außerhalb eines Teilkreises positioniert werden, als in einem Fall, in dem der Aufreitzahn in ein breites Kettenglied eingreift.

Wie vorstehend bereits mehrfach angedeutet, können an wenigstens dem ausgewählten Kettenrad Schaltgassen für einen Wechsel der Antriebskette zwischen dem ausgewählten Kettenrad und einem kleineren Kettenrad vorgesehen sein, wobei an dem ausgewählten Kettenrad wenigstens eine erste Schaltgasse für einen Wechsel der Antriebskette von dem ausgewählten Kettenrad auf ein durchmesserkleineres Kettenrad vorgesehen ist, wobei man im Fachjargon von einem auswärts gerichteten bzw. outboard-Schaltvorgang spricht, und wobei an dem ausgewählten Kettenrad wenigstens eine zweite Schaltgasse für einen Wechsel der Antriebskette von einem durchmesserkleineren Kettenrad auf das ausgewählte Kettenrad vorgesehen ist, wobei man im Fachjargon von einem einwärts gerichteten bzw. inboard-Schaltvorgang spricht.

Dabei ist es erfindungsgemäß möglich, dass die wenigstens eine erste Schaltgasse und die wenigstens eine zweite Schaltgasse in Umfangsrichtung des ausgewählten Kettenrades betrachtet im Abstand voneinander angeordnet sind.

Eine Weiterbildung der Erfindung sieht vor, dass in Abhängigkeit von der Größe des ausgewählten Kettenrades in Umfangsrichtung des ausgewählten Kettenrades betrachtet mehrere erste Schaltgassen und/oder mehrere zweite Schaltgassen vorgesehen sind. So können beispielsweise bei einer Paarung zweier Kettenräder mit einem Zähnezahlunterschied von 8 jeweils 4 Schaltgassen für eine einwärts gerichteten und jeweils 4 Schaltgassen für einen auswärts gerichteten Schaltvorgang vorgesehen sein. Bei kleineren Zähnezahlunterschieden ergeben sich weniger Schaltoptionen mit optimierter Tangentialbedingung.

Es werden beispielsweise bei einer Kettenradpaarung eines größeren Kettenrads mit 18 Zähnen und eines kleineren Kettenrads mit 15 Zähnen insgesamt 3 Schaltgassen bereitgestellt, nämlich eine Schaltgasse für den nach außen gerichteten bzw. outboard-Schaltvorgang und 2 Schaltgassen für den nach innen gerichteten bzw. inboard-Schaltvorgang. Diese Schaltlogik bietet sich insbesondere deshalb an, weil damit garantiert werden kann, dass in beide Schaltrichtungen innerhalb einer Umdrehung ein Verlagern der Antriebskette zuverlässig ausgeführt werden kann. Läuft die Antriebskette auf dem Kettenrad mit 18 Zähnen, so ist diese bereits hinsichtlich ihrer Kettenlaschen-Ausrichtung korrekt positioniert und kann in dieser Ausrichtung korrekt auf das kleine Kettenrad verlagert werden. Läuft die Antriebskette hingegen auf dem Kettenrad mit 15 Zähnen, so werden die beiden selektiv wirkenden Schaltgassen für den inboard-Schaltvorgang eingesetzt die einen gerichteten Verlauf der Kette auf das größere Kettenrad gewährleisten, obgleich das kleinere Kettenrad in Form eines Übergangs-Kettenrads ausgebildet ist und eine ungerade Anzahl von Zähnen aufweist und wegen der ungeraden Anzahl von Zähnen auf dem Kettenrad an sich keine vorbestimmte Kettenlaschen-Ausrichtung möglich ist.

Eine Weiterbildung der Erfindung sieht vor, dass jede Schaltgasse von einem Schaltgassen-Referenzzahn ausgeht, wobei der Schaltgassen-Referenzzahn im Falle einer ersten Schaltgasse der erste Zahn des ausgewählten Kettenrades ist, der beim Verlassen des ausgewählten Kettenrads gerade nicht mehr in einen Kettenglied-Zwischenraum der Antriebskette greift. In diesem Zusammenhang kann erfindungsgemäß vorgesehen sein, dass der auf den Schaltgassen-Referenzzahn folgende Zahn (T-1) des ausgewählten Kettenrades, der noch in einen Kettenglied-Zwischenraum der Antriebskette greift, an seiner vom kleineren Kettenrad abgewandten Seite mit einer reduzierten Zahndicke ausgeführt ist, wobei sich der Materialabtrag gemessen von der Rückseite des ursprünglichen (dicken) Zahnes vorzugsweise auf eine Tiefe von 1,2-1,7 mm erstreckt.

Ferner kann in diesem Zusammenhang erfindungsgemäß vorgesehen sein, dass die dem Schaltgassen-Referenzzahn unmittelbar folgenden Zähne des ausgewählten Kettenrades, die jeweils noch in einen Kettenglied-Zwischenraum der Antriebskette greifen, an ihrer vom durchmesserkleineren Kettenrad abgewandten Seite mit einer reduzierten Zahndicke ausgeführt sind.

Eine Weiterbildung der Erfindung sieht vor, dass der Schaltgassen-Referenzzahn an seiner Zahnspitze mit einer dem durchmesserkleineren Kettenrad zugewandten Fase ausgebildet ist.

Darüber hinaus kann erfindungsgemäß vorgesehen sein, dass radial innerhalb des Schaltgassen-Referenzzahns an der dem durchmesserkleineren Kettenrad zugewandten Seite des ausgewählten Kettenrads eine Außenlaschen-Aussparung vorgesehen ist, die sich tiefer in das betreffende Kettenrad hinein erstreckt, als eine an diese angrenzende Ausnehmung am Schaltgassen-Referenzzahn.

Darüber hinaus sieht eine Weiterbildung der Erfindung vor, dass die radial innerhalb des Schaltgassen-Referenzzahns vorgesehene Außenlaschen-Aussparung sich tiefer in das ausgewählte Kettenrad hinein erstreckt, als eine an diese angrenzende Ausnehmung an einem dem Schaltgassen-Referenzzahn unmittelbar vorauseilenden Zahn des ausgewählten Kettenrads.

Zusätzlich kann erfindungsgemäß vorgesehen sein, dass der Schaltgassen-Referenzzahn im Bereich seiner Lastflanke eine Abweisfase aufweist, die sich vorzugsweise über den Lastflankenradius bis hin zum Fußkreis erstreckt. In besonderer Ausprägung kann sich diese Fase sogar bis hin zum Einlaufflankenradius des folgenden Zahnes erstrecken.

Ferner ist in diesem Zusammenhang möglich, dass die lastflankenseitige Abweisfase des Schaltgassen-Referenzzahns in die Außenlaschen-Aussparung einmündet.

Erfindungsgemäß kann ferner vorgesehen sein, dass einzelne Zähne des Kettenrads, die für einen Eingriff in den Zwischenraum eines breiten Kettengliedes vorgesehen sind, an ihrer kraftübertragenden Lastflanke mit einer Kettenlaschen-Ausnehmung versehen sind, wobei der wenigstens eine Aufreitzahn an seiner lastfreien Einlaufflanke frei von einer Kettenlaschen-Ausnehmung ausgebildet ist.

Zusätzlich oder alternativ hierzu ist es möglich, dass einzelne Zähne des Kettenrads, die für einen bevorzugten Eingriff in den Zwischenraum der breiten Kettenglieder vorgesehen sind, zumindest an einer Seite nach Maßgabe der Breite des Zwischenraums der breiten Kettenglieder mit einem axialen Vorsprung versehen sind.

Eine Weiterbildung der Erfindung sieht vor, dass einzelne Zähne des Kettenrads, die für einen bevorzugten Eingriff in den Zwischenraum der breiten Kettenglieder vorgesehen sind, in einem zu einer Radialstrahl orthogonalen Schnitt betrachtet, kreuzförmig oder T-förmig oder L-förmig ausgebildet sind.

Eine einfache Fertigung der erfindungsgemäßen Mehrfach-Kettenradanordnung, die zusätzlich eine kompakte Anordnung der Kettenräder erlaubt, sieht vor, dass jeweils die Oberflächen zumindest eines Teils der, vorzugsweise aller, Zähne wenigstens eines der Kettenräder auf einer zu einem benachbarten Kettenrad mit kleinerem Durchmesser weisenden Seite im Wesentlichen in einer gemeinsamen Ebene liegen, wobei die einzelnen Zähne, die eine Frontausnehmung aufweisen, hiervon ausgenommen sind.

Ferner kann erfindungsgemäße vorgesehen sein, dass wenigstens ein Kettenrad mit kleinerem Durchmesser gegenüber einem benachbarten Kettenrad mit größerem Durchmesser phasenmäßig derart zueinander ausgerichtet ist, dass bei einem Wechsel der Kette von dem Kettenrad mit größerem Durchmesser auf das Kettenrad mit kleinerem Durchmesser eine Synchronität zwischen den Zähnen des Kettenrads mit kleinerem Durchmesser und jeweils zugehörigen Kettengliedern der Kette erreicht wird.

Entsprechend kann erfindungsgemäß ferner vorgesehen sein, dass wenigstens ein Kettenrad mit kleinerem Durchmesser gegenüber einem benachbarten Kettenrad () mit größerem Durchmesser phasenmäßig derart ausgerichtet ist, dass bei einem Wechsel der Kette von dem Kettenrad mit kleinerem Durchmesser auf das Kettenrad mit größerem Durchmesser eine Synchronität zwischen den Zähnen des Kettenrads mit größerem Durchmesser und jeweils zugehörigen Kettengliedern der Kette erreicht wird.

Wie vorstehend bereits angedeutet, ist es bei der erfindungsgemäßen Mehrfach-Kettenradanordnung möglich, dass wenigstens ein Übergangsritzel vorgesehen ist, das eine ungerade Anzahl von Zähnen aufweist.

Zu den Vorteilen der erfindungsgemäßen Mehrfach-Kettenradanordnung gehören nicht abschließend die Folgenden:
- Das Schalten auf Kettenräder mit kleinerem Durchmesser unter Last wird verbessert. Damit ergeben sich weniger Variationen bei Schaltvorgängen und ein reduziertes Risiko von unerwünschten Schaltzuständen.
- Die Vibrationen der Kette bei einem Schräglauf werden reduziert.
- Ein sogenannter "Autoshift", das heißt ein unbeabsichtigtes Wechseln der Kette zu einem benachbarten Kettenrad, kann weitestgehend vermieden werden. Auch die Gefahr eines Abspringens der Kette vom Kettenrad wird vermindert.
- Der Verschleiß wird auch bei hohen Lastzuständen reduziert, da selbst beim Vorsehen von Einprägungen an den Zähnen infolge der vorhandenen dicken Zähne noch ausreichend große Kontaktflächen zwischen Kettenrollen und Zahnflanken bestehen. Darüber hinaus wird gewährleistet, dass auch bei hohen Lastzuständen ein präzises Schalten unter Vermeidung ruckartiger Lastspitzen erreicht werden kann.
- Üblicherweise kann die Antriebskette das Kettenrad an einer bestimmten Schaltgasse nur mit der Innenlasche verlassen. Daraus folgt, dass nicht an der gleichen Schaltgasse geschaltet werden kann, wenn eine Außenlasche den Schaltzahn passiert. Die erfindungsgemäße Lösung des Problems besteht darin, an Kettenrädern mit einer geradzahligen Anzahl von Zähnen eine definierten Kettenlaschen-Ausrichtung zu erreichen. Dies erfolgt beispielsweise durch die vorstehend beschriebenen die verschiedenen Ausprägungen von Aufreitzähnen oder Aufreitvorsprüngen.
- Insbesondere bei einem Innenlaschen-Abstieg der Kette kann mit der Erfindung auch bei großen Sprüngen, das heißt bei großen Differenzen der Zähneanzahl benachbarter Kettenräder, ein sanftes Schalten sichergestellt werden.
- Der partiell reduzierte Fußkreisdurmesser an einem Kettenrad stellt demgegenüber eine Weiterbildung dar, die es ermöglicht auch nicht symmetrische Schaltgassenanordnungen zu bewerkstelligen.
- Bei herkömmlichen Kettenrädern ist es kaum möglich, unkontrollierte outboard-Schaltvorgänge zu verhindern. Probleme ergeben sich in diesem Zusammenhang insbesondere durch eine kurze freie Kettenlänge zu der Schaltwerksrolle und/oder durch den unerwünschten Effekt von Umschalthilfen, die für andere Funktionen benötigt werden, wie beispielsweise unerwünschte Effekte von Schaltgassen, die für inboard-Schaltvorgänge vorgesehen sind. Die besonderen Führungseigenschaften der materialstark ausgeführten Aufreitzähne können hier gezielt eingesetzt werden, um ein unkontrolliertes Absteigen (outboard-Schaltvorgänge) der Kette zu verhindern.
- Bei Inboard-Schaltvorgängen wird das Schaltwerk aktiv durch einen Seilzug betätigt. Beim Aufsteigen der Kette von einem kleineren Kettenrad auf ein größeres Kettenrad bewirkt die Verkürzung der Kette eine Bewegung des Schaltwerkskäfigs gegen die Käfigfeder. Daraus resultieren relativ hohe Kräfte, die dem Aufsteigen und Einlaufen der Kette hilfreich sind. Beim outboard-Schaltvorgang wird zur Aktivierung des Schaltwerks hingegen der Seilzug freigegeben. Eine üblicherweise verwendete Parallelogrammfeder des Schaltwerks muss den Stellvorgang selbsttätig ausführen, wobei von dieser auch die Reibungskräfte im Seilzugsystem überwunden werden müssen. Beim Absteigen der Kette von einem größeren Kettenrad zu einem kleineren Kettenrad wird Kettenlänge freigegeben, die durch die Bewegung des Schaltwerkskäfigs wieder kompensiert wird. Auch hier müssen Reibungskräfte überwunden werden und die vergleichsweise geringen Kettenzugkräfte reichen oft nicht aus, um ein sauberes Einlaufen der Kette auf das kleinere Ritzel zu gewährleisten. Diese Problemstellung wird durch die erfindungsgemäße Ausprägung der outboard-Schaltgasse gelöst.

Die Erfindung wird nun folgend auf der Grundlage von Figuren bevorzugter Ausführungsformen beschrieben:
- Fig. 1: eine Draufsicht auf einen Ausschnitt eines erfindungsgemäßen Kettenrads mit teilweise reduzierten Fußkreis;
- Fig. 2: eine perspektivische Schnittansicht eines erfindungsgemäßen Kettenrads mit einem Aufreitzahn;
- Fig. 3: eine perspektivische Teilansicht eines erfindungsgemäßen Kettenrads zur Erläuterung einer inboard-Schaltgasse;
- Fig. 4: eine Darstellung der jeweils 3 in- und outboard Schaltgassenoptionen für ein Kettenrad mit 18 Zähnen, das in Verbindung mit einem nicht gezeigten Kettenrad mit 15 Zähnen eingesetzt wird;
- Fig. 5: eine Darstellung der erfindungsgemäßen Ausprägung der Schaltgassenanordnung bei einer Ritzelkombination mit 15 und 18 Zähnen mit einer outboard- und zwei selektiven inboard-Schaltgassen;
- Fig. 6a: eine perspektivische Teilfrontansicht eines erfindungsgemäßen Kettenrads mit einer outboard-Schaltgasse;
- Fig. 6b: eine perspektivische Teilrückansicht des erfindungsgemäßen Kettenrads aus Figur 6a;
- Fig. 6c: eine Draufsicht auf den Abschnitt des Kettenrads gemäß Figuren 6a und 6b;
- Fig. 7a-e: verschiedene Darstellungen zur Erläuterung der Wirkung eines axial versetzen Aufreitzahnes, wobei

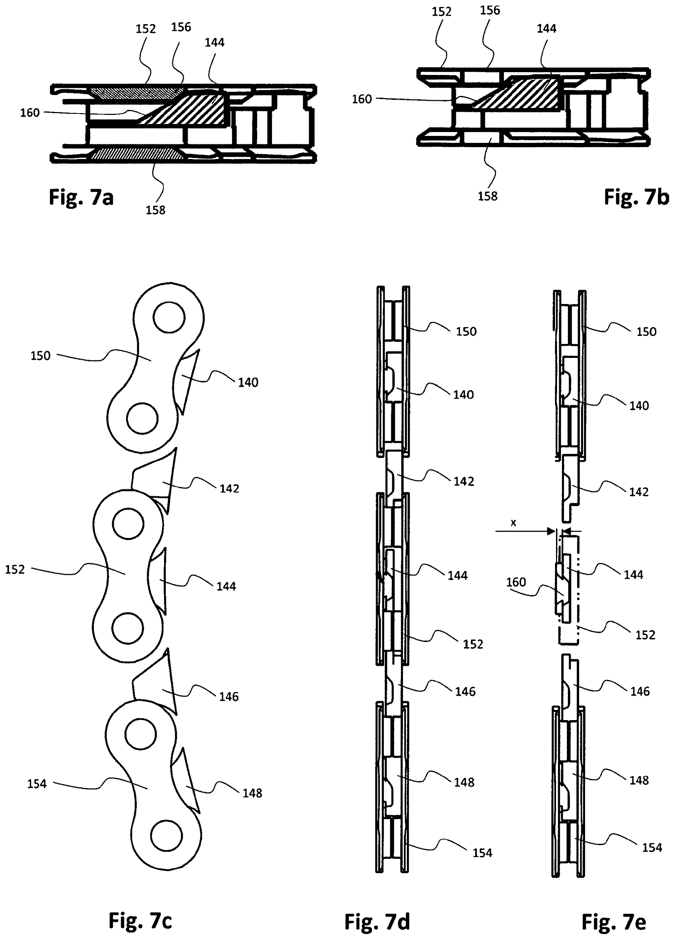

Fig. 7a eine Schnittansicht durch ein schmales Kettenglied in der Schnittebene I-I in Figur 7c zeigt,
Fig. 7b eine Schnittansicht durch ein schmales Kettenglied in der Schnittebene II-II in Figur 7c zeigt,
Fig. 7c eine schematische Seitenansicht zur Erläuterung des Zusammenwirkens der schmalen Kettenglieder und der Zähne zeigt,
Fig. 7d eine Draufsicht auf den Abschnitt gemäß Figur 7c zeigt,
Fig. 7e eine Ansicht entsprechend Figur 7d zeigt, wobei das mittlere schmale Kettenglied nur hinsichtlich seines Kettenlaschen-Zwischenraums schematisch wiedergegeben ist;

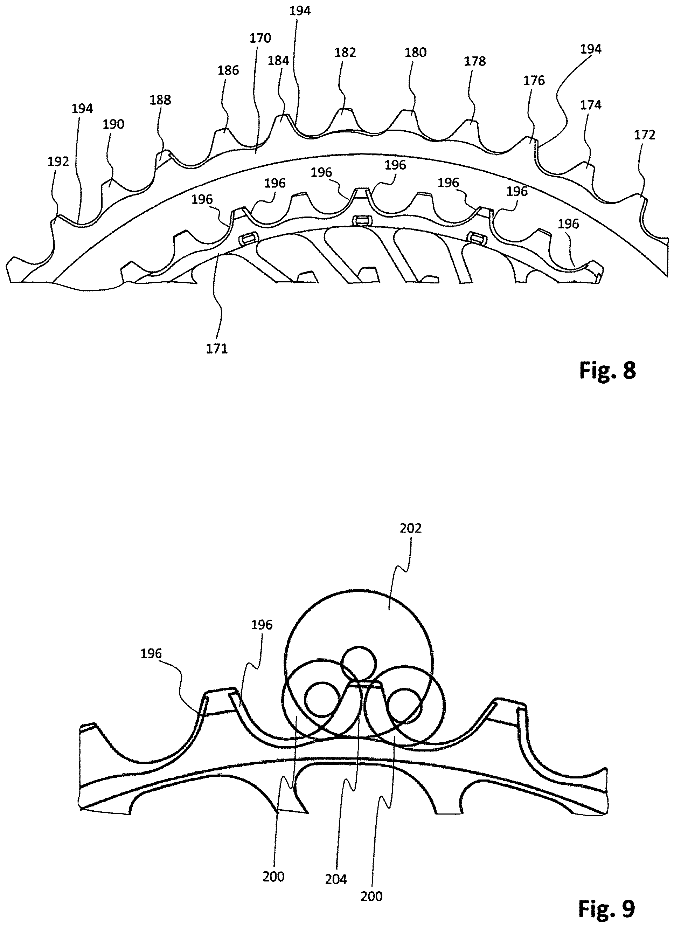

- Fig. 8: einen Ausschnitt einer Paarung zweier erfindungsgemäße Kettenräder zeigt; (Ansicht der Rückseite)
- Fig. 9: eine Darstellung zur Läuterung der Herstellung der Kettenräder gemäß Figur 9;

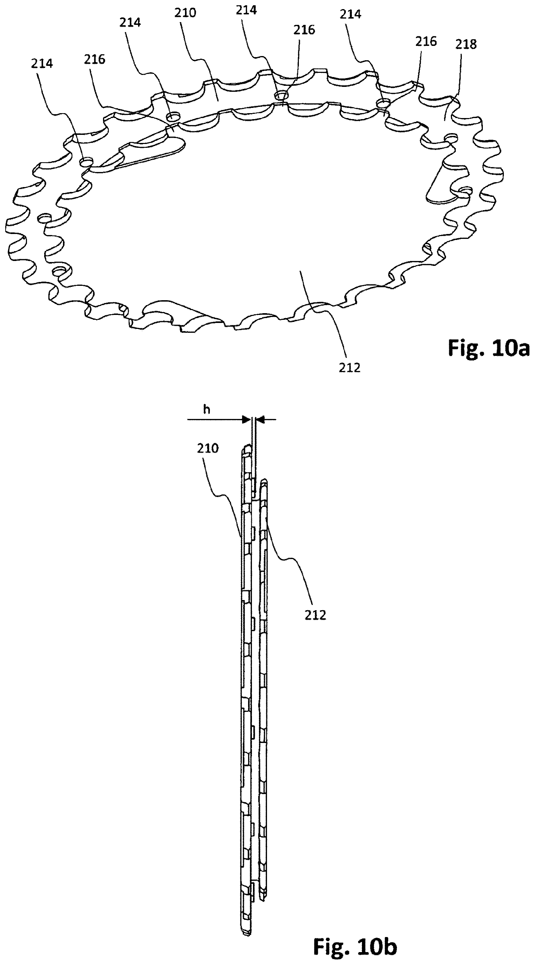

- Fig. 10a bis 10f: verschiedene Ansichten zur Erläuterung der Anordnung und Wirkung von Aufreitvorsprung zeigen, wobei
Fig. 10a eine perspektivische Ansicht einer Paarung zweier Kettenräder darstellt, wobei das durchmessergrößere Kettenrad Aufreitvorsprünge aufweist;
Fig. 10b eine Draufsicht auf die Kettenrad-Paarung gemäß Figur 10a zeigt;

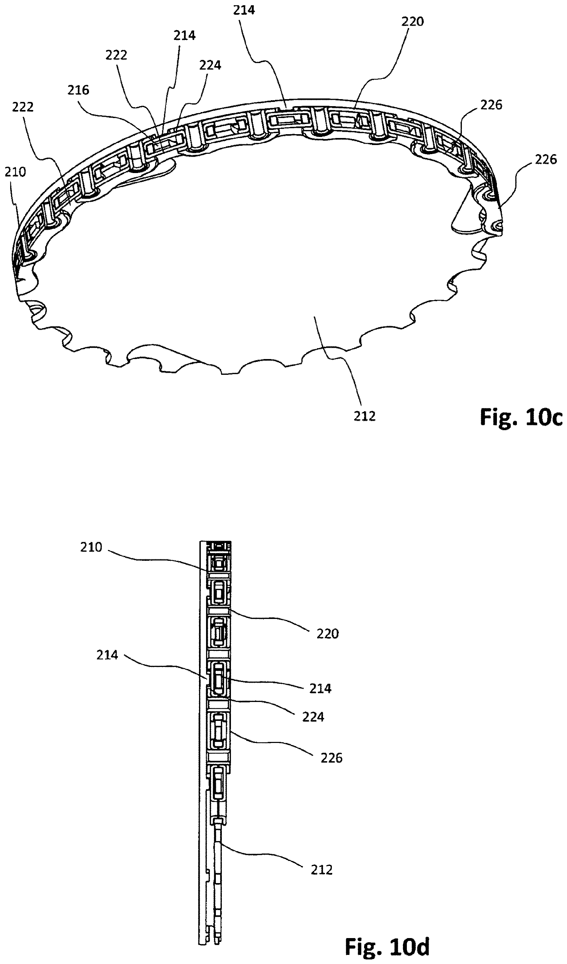

Fig. 10c eine Ansicht entsprechend Figur 10a mit aufgelegter, mittig geschnittener Antriebskette zeigt;
Fig. 10d eine Draufsicht auf die Kettenrad-Paarung samt aufgeschnittener Kette entsprechend Figur 10c zeigt;

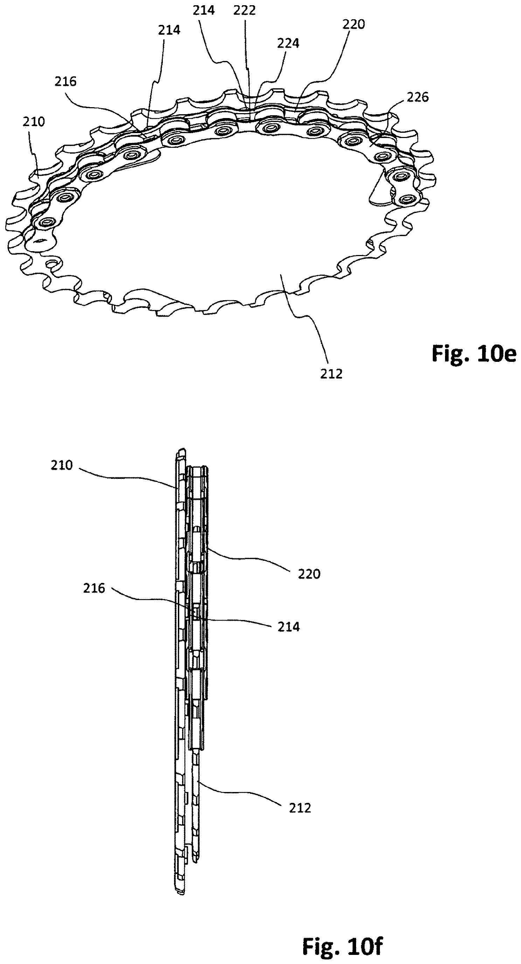

Fig. 10e und 10f Ansichten entsprechend Figuren 10c und 10d mit vollständiger Kette zeigen; und
- Fig. 11 und 12: Darstellungen sind, die zu der eingangs erläuterten Diskussion der unerwünschten Abweichung von der Tangentialbedingung dienen.

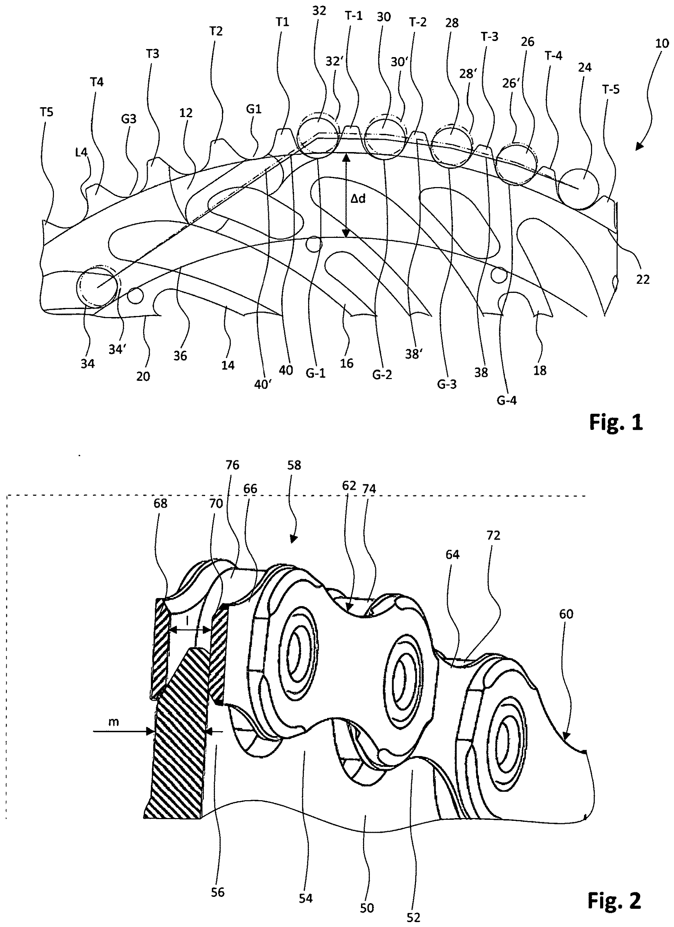

Die Figur 1 zeigt einen Ausschnitt einer ersten Ausführungsform eines erfindungsgemäßen Kettenrades 10 für eine Kettenradanordnung. Dieses weist an seinem Außenumfang einen geschlossenen Ring 12 mit einer Reihe von Zähnen T1 bis T5 und T-1 bis T-5 auf, wobei der Zahn T1 als Referenzzahn bezeichnet wird. Man erkennt, dass der geschlossene Ring 12 durch eine Reihe von gekrümmt radial einwärts laufenden Armen 14, 16, 18 mit einer nicht gezeigten Nabe verbunden ist. Die dem Betrachter zugewandte Seite wird als Frontseite 20 bezeichnet. Die Zähne sind durch Zahnzwischenräume voneinander getrennt, wobei die in dem Ausschnitt gemäß Figur 1 nach links weisenden Zahnflanken jeweils die Lastflanken der Zähne T1 bis T5 und T-1 bis T-5 darstellen, die in einem Antriebsfall mit einer Antriebskette lastübertragender wirksam werden. Entsprechend der Nummerierung der Zähne gibt es für jeden Zahn die Lastflanken L1 bis L5 und L-1 bis L-5, wobei beispielhaft nur die Lastflanke L4 eingetragen ist.

Die Zahnzwischenräume werden von einer bogenförmigen Kontur beschrieben, die in die Lastflanke Ln (L5 bis L-5) mündet. Diese bogenförmige Kontur berührt mit ihrem am weitesten einwärts liegenden Bereich, der auch als Zahngrund Gn (G5 bis G-5) bezeichnet wird und von dem lediglich der Zahngrund G3 eingezeichnet ist, jeweils einen Fußkreis 22.

Man erkennt in Figur 1 ferner, dass eine Antriebskette auf dem Kettenrad 10 aufliegt. Zur Vereinfachung der Darstellungen sind lediglich Kettenrollen 24, 26, 28, 30, 32 gezeigt, die an den Lastflanken L-1 bis L-5 der Zähne T-1 bis T-5 kraftübertragend anliegen. Man erkennt, dass die Kettenrolle 34 radial deutlich innerhalb des Fußkreises 22 des Kettenrads 10 liegt. Tatsächlich liegt die Kettenrolle 34 auf einem Fußkreis 36 auf, der schematisch ein durchmesserkleineres Kettenrad eben mit diesem Fußkreis 36 repräsentiert.

Die durchgezogene Linie 38, 40 beschreibt den tatsächlichen Verlauf der Kette, die zunächst entlang dem Abschnitt 38 gemäß dem Eingriff auf den Zähnen T-1 bis T-5 entlang des Umfangs des Kettenrads 10 verläuft und dann entlang dem Abschnitt 40 von dem Kettenrad 10 zu dem durchmesserkleineren, durch den Fußkreis 36 repräsentierten Kettenrad verläuft, wobei die Kettenrolle 34 mit einem Zahn dieses Kettenrads in Eingriff gelangt. Figur 1 zeigt also eine Situation, in der die Kette von dem durchmessergrößeren Kettenrad 10 auf das durch den Fußkreis 36 repräsentierte durchmesserkleinere Kettenrad verlagert wird. Wesentlich ist dabei, dass zwischen dem größeren Kettenrad 10 und dem durchmesserkleineren Kettenrad ein verhältnismäßig großer Durchmesser-Sprung Δd vorliegt, so dass der frei verlaufende Kettenabschnitt 40 zwischen der Kettenrolle 32 und der Kettenrolle 34 relativ lang ist.

Wie eingangs mit Bezug auf die Figuren 11 und 12 beschrieben kann es in solchen Situationen zu Problemen kommen, die mit einer Abweichung von der Tangentialbedingung zusammenhängen. Diese Probleme würden dann auftreten, wenn die Zahnzwischenräume mit dem jeweiligen Zahngrund Gn, auf dem die Kettenrollen 24 bis 32 gemäß herkömmlicher Kettenräder auf dem Fußkreis 22 aufliegen würden. Dies ist in Figur 1 mit Kettenrollen und einer Kettenverlaufslinie gezeigt, die in Strichpunkt-Linien dargestellt sind. Man erkennt, dass die in Strichpunkt-Linien dargestellten Kettenrollen 26' bis 32' alle radial weiter außen liegen, als die mit durchgezogener Linie gezeichneten Kettenrollen 26 bis 32. Dementsprechend sind auch die Verlaufslinien 38' und 40' abweichend von den durchgezogene Linien gezeigt. In der Folge kommt die Kettenrolle 34' an dem durch den Fußkreis 36 repräsentierten durchmesserkleineren Kettenrad in einer ungünstigen Position zum Eingriff.

Um diesem Problem zu begegnen sieht das Ausführungsbeispiel gemäß Figur 1 vor, die Zahngrund-Punkte G-4, G-3, G-2 und G-1 stufenweise mit zunehmendem Abstand vom Fußkreis 22 radial einwärts zu verlagern, umso den Kettenlinienverlauf 38 zu erreichen. Der Fußkreis 22 wird also an den Zähnen T-4 bis T-1 partiell in seinem Durchmesser reduziert. Dementsprechend kann der Übergangsabschnitt 40 flacher zugunsten einer Reduzierung der Abweichung von der Tangentialbedingung auf das durchmesserkleinere durch den Fußkreis 36 repräsentierte Kettenrad auflaufen. Dies stabilisiert das Umschaltverhalten der Kette von dem durchmessergrößeren Kettenrad 10 auf das durchmesserkleinere durch den Fußkreis 36 repräsentierte Kettenrad.

Man erkennt, dass der folgende Zahngrund G1 dann wieder auf dem Fußkreis liegt.

Figur 2 zeigt eine alternative Ausführungsform der Erfindung in einer perspektivischen Teilschnittansicht eines Kettenrads 50, von dem nur 3 Zähne 52, 54, 56 zu erkennen sind, wobei der vordere Zahn 56 in einem Querschnitt gezeigt ist. Auf dem Kettenrad 50 liegt eine Antriebskette 58 auf, die sich aus einer Reihe von breiten Kettengliedern 60, 62 und dazwischenliegenden schmalen Kettengliedern 64, 66 und entsprechenden alternierenden breiten und schmalen Kettengliedern fortlaufend zusammensetzt. Die Kettenglieder sind jeweils über zwei einander gegenüberliegende Kettenlaschen gebildet, von denen lediglich die beiden geschnitten dargestellten Kettenlaschen 68 und 70 bezeichnet sind. Ferner sind die Kettenglieder über Kettenrollen 72, 74, 76 und zugeordnete Nietverbindungen miteinander in herkömmlicher Weise verbunden.

Man erkennt, dass der Zahn 56 an seinem Zahnkopf 78 mit einer dachförmigen Kontur mit seitlichen Schrägen ausgebildet ist, die es erlaubt, leichter in einen Kettenglied-Zwischenraum einzudringen. Wesentlich ist aber, dass der Zahn 56 als Aufreitzahn ausgebildet ist, wobei dessen Materialstärke m deutlich breiter ist als die lichte Weite I zwischen zwei benachbarten Laschen 66, 68 eines schmalen Kettenglieds ist. Der Dimensionsunterschied I-m ist derart groß, dass die Kettenlasche 68 auf der in Figur 2 linken schrägen Konturoberfläche des Dachprofils des Zahnkopfes 78 aufliegt, sodass der Zahn 56 nicht vollständig zwischen die beiden Kettenlaschen 68 und 70 des schmalen Kettenglieds eindringen kann. Die Materialstärke m des Zahnes 56 ist aber so gewählt, dass der Zahn 56 vollständig in einen Kettenglied-Zwischenraum eines breiten Kettenglieds 60 bzw. 62 eindringen kann.

Mit anderen Worten bewirkt ein derartig mit einer größeren Materialstärke m ausgebildeter Aufreitzahn 56, dass nur breite Kettenglieder diesen Aufreitzahn 56 in ihrem Zwischenraum aufnehmen können, wohingegen schmale Kettenglieder auf dem Dachprofil des Zahnkopfes 78 aufreiten und dann radial weiter außerhalb liegen, als in einem Fall, in dem ein breites Kettenglied in Eingriff mit dem Aufreitzahn 56 kommen würde. Stellt sich eine Situation ein, wie in Figur 2 gezeigt, so hat dies zur Folge, dass die Antriebskette 58 radial weiter außerhalb liegt, als in einem regulären Ketten-Eingriffszustand. Dadurch kann bewirkt werden, dass die Antriebskette 58 nicht hinreichend mit den Zähnen Eingriff gelangt und unter Last in Umfangsrichtung relativ zum Kettenrad 50 um ein Kettenglied "weiter rutscht". Dies würde bedeuten, dass dann ein breites Kettenglied, beispielsweise das folgende Kettenglied 62, mit dem Aufreitzahn 56 in Eingriff gelangt und aufgrund seines größeren Laschenabstandes den Aufreitzahn 56 vollständig aufnimmt, so dass die benachbarten Kettenrollen auf dem benachbarten Zahngrund zur Auflage gelangen und mit den Zahnflanken satt anliegend und kraftübertragend in Eingriff gelangen.

Diese Ausführungsform der Erfindung sieht also vor, wenigstens einen Aufreitzahn 56 vorzusehen, der allein oder in einer Folge mehrerer Aufreitzähne eine Verlagerung der Antriebskette 58 nach radial außen bewirkt, wenn deren Kettenlaschen-Ausrichtung nicht zu dem betreffenden Kettenrad passt. Aufgrund dieser Verlagerung der Antriebskette 58 nach radial außen rutscht diese unter Last in Kettenlängsrichtung um die Distanz eines Kettengliedes weiter, sodass ein entsprechender Eingriff gewährleistet ist. Dadurch lässt sich die Antriebskette 58 in gewünschter Weise passend zu dem Kettenrad 58 ausrichten. Dies hat den Vorteil, dass bei einem Umschaltvorgang, bei dem die Kette beispielsweise von einem kleineren Kettenrad auf das Kettenrad 58 umgelegt wird, die Kette selbst dann in passende Kettenlaschen-Ausrichtung zu dem Kettenrad 58 gebracht werden kann, wenn die Kette vom kleineren Kettenrad ausgehend nicht passend auf das Kettenrad 58 einläuft. Ein solcher Zustand stellt sich beispielsweise dann ein, wenn das kleinere Kettenrad ein Übergangskettenrad ist, das eine ungerade Zähnezahl aufweist. Ohne besondere Vorkehrungen wird je nach Anzahl der Umdrehungen des kleineren Kettenrads bei einem Schaltvorgang an derselben Winkelposition des kleineren Kettenrads entweder ein breites oder ein schmales Kettenglied erstmals mit dem durchmessergrößeren Kettenrad 58 in Eingriff gelangen. Es kann also zu einer passenden Kettenlaschen-Ausrichtung zu dem Kettenrad 58 oder gerade zu einer nicht passenden Kettenlaschen-Ausrichtung zu dem Kettenrad 58 kommen, wobei im letztgenannten Fall eine Korrektur der Kettenlaschen-Ausrichtung zu dem Kettenrad 58 erforderlich ist.

Diese Maßnahme bietet sich insbesondere dann an, wenn das Kettenrad 58 derart ausgebildet ist, dass es eine entsprechend passende Kettenlaschen-Ausrichtung erfordert, wie beispielsweise bei einem Kettenrad 58 der Fall, das zumindest abschnittsweise eine Folge von dicken und dünnen Zähnen zur Verbesserung der Kettenführung aufweist.

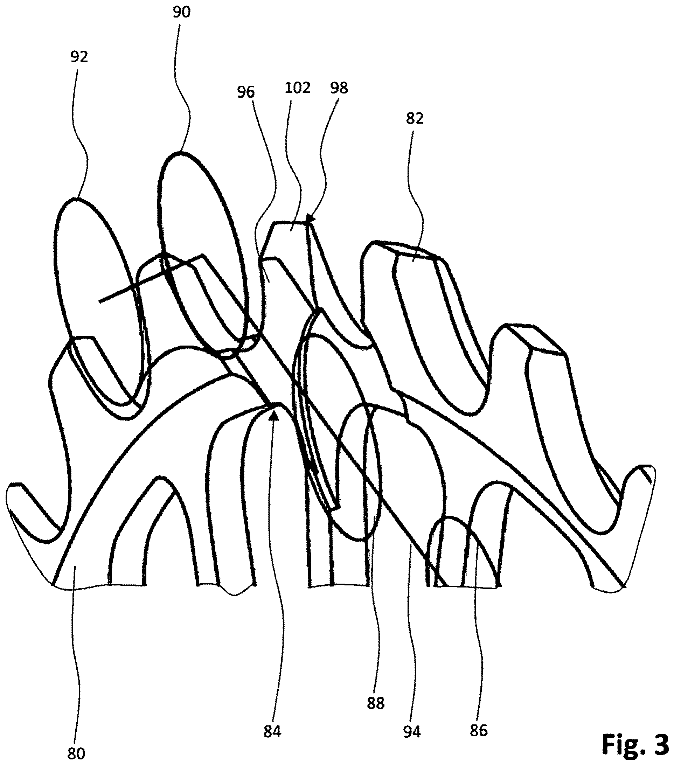

Figur 3 zeigt ein entsprechendes Ausführungsbeispiel eines Kettenrades 80 mit einem materialstark ausgebildeten Aufreitzahn 82. Dieses Kettenrad 80 ist zusätzlich mit einer sogenannten Schaltgasse 84 versehen, die entsprechend dem Pfeil P vorsieht, dass eine stilisiert nur mit angedeuteten Kettenrollen 86, 88, 90, 92 gezeichnete Kette von einem nicht gezeigten durchmesserkleineren Kettenrad auf das Kettenrad 80 im Rahmen eines Umschaltvorgangs angehoben wird. Dies ist auch durch den Kettenlinienverlauf 94 dargestellt. Man erkennt, dass die Schaltgasse 84 eine Kettenlaschen-Ausnehmung 96 aufweist, die direkt unterhalb des Aufreitzahns 82 ausgebildet ist. Auf den Aufreitzahn 82 folgt ein Referenzzahn 98 mit einer frontseitigen Ausnehmung 100 und mit einem Zahnkopf mit einer Abweisfase 102. Die Anordnung dieses Aufreitzahnes hat einerseits den Effekt, dass bei einer nicht passenden Kettenlaschen-Ausrichtung die Antriebskette infolge eines Umlaufs um das Kettenrad 80 in ihrer Längsrichtung um die Distanz eines Kettenglieds verlagert wird und so korrekt ausgerichtet wird, wie oben beschrieben, sodass anschließend der Aufreitzahn 82 in einem breiten Kettenglied aufgenommen wird.

Zusätzlich hat die Anordnung dieses Aufreitzahnes 82 unmittelbar an der Schaltgasse 84 den Vorteil, dass ein unerwünschter Schaltvorgang von dem durchmessergrößeren Kettenrad 80 auf das nicht gezeigte durchmesserkleinere Kettenrad wirksam verhindert wird. Ein solcher unerwünschter Schaltvorgang droht insbesondere deshalb, weil der Referenzzahn 98 so schmal und mit einer zusätzlichen Abweisfase 102 ausgebildet ist. Bei Lastsituationen oder Vibrationen besteht das Risiko, dass ein schmales Kettenglied der Antriebskette neben diesen Zahn greift und so ein unerwünschter Schaltvorgang auf das kleinere Kettenrad ausgelöst wird. Durch die breite Ausgestaltung des Aufreitzahns 82 hat die Kette jedoch kaum seitliches Spiel und wird so sicher zum Eingriff auf den sehr schmalen Referenzzahn 102 geführt. Sie greift trotz der schmalen Ausführung des Referenzzahns 102 sicher auf diesen auf.

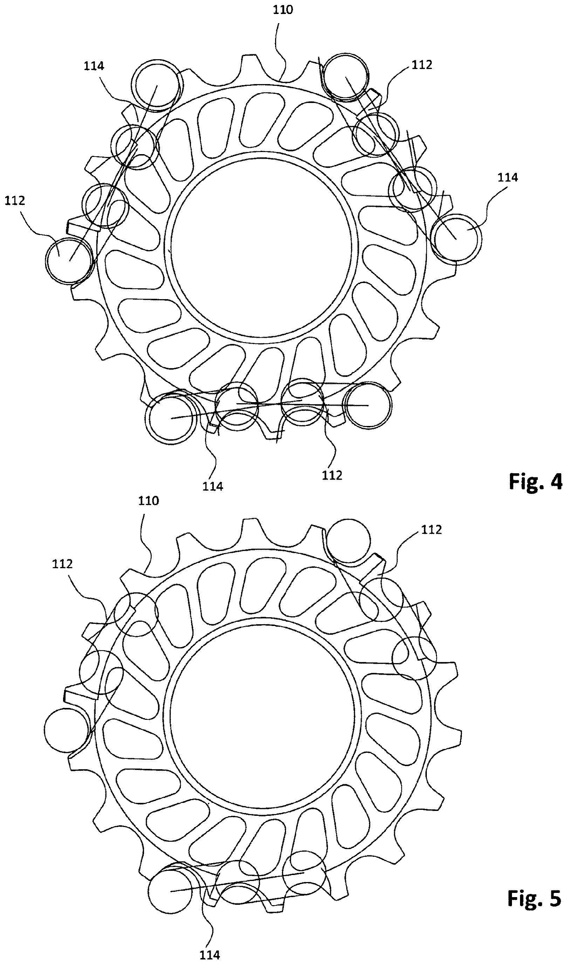

Figuren 4 und 5 erläutern die Anordnung von Schaltgassen. So zeigt Figur 4 die theoretische Möglichkeit, bei einem Kettenrad 110 mit 18 Zähnen, das mit einem nicht gezeigten Kettenrad 15 Zähnen kombiniert wird, theoretisch insgesamt 6 Schaltgassen vorzusehen, nämlich 3 Schaltgassen 112 für einen Schaltvorgang von dem durchmesserkleineren Kettenrad auf das durchmessergrößere Kettenrad, was im Fachjargon als inboard-Schaltvorgang bezeichnet wird, sowie 3 Schaltgassen 114 für einen Schaltgang von dem durchmessergrößeren Kettenrad auf das durchmesserkleinere Kettenrad, was im Fachjargon als outboard-Schaltvorgang bezeichnet wird. Die betreffenden Schaltgassen 112 und 114 sind paarweise relativ nah beieinander angeordnet und die inboard-outboard-Schaltgassen-Paare sind jeweils um 120° zueinander Winkel versetzt um den Umfang des Kettenrads 110 vorgesehen.

Die Auslegung der grundlegenden Schaltlogik stellt bei dieser Technologie eine besondere Herausforderung dar. Zum einen muss bezüglich der Tangentialbedingung oft ein Kompromiss zwischen den inboard- und outboard-Schaltpositionen gefunden werden, wobei unsymmetrische Bedingungen die Situation noch verschärfen können. Die vorstehend mit Bezug auf Figur 1 beschriebene Methode des partiell reduzierten Fußkreisdurchmessers bei outboard-Schaltvorgängen, also bei Schaltvorgängen von einem durchmessergrößeren Kettenrad zu einem durchmesserkleineren Kettenrad, und das Führen der Kette entlang eines bogenförmigen Verlaufs bei inboard-Schaltvorgängen, wie es zum Teil schon aus dem Stand der Technik bekannt ist, können einzeln und kombiniert zur Lösung dieses Problem eingesetzt werden.

Um eine optimale Schaltfunktion zu gewährleisten, werden bevorzugt voneinander distanzierte inboard- bzw. outboard-Schaltgassen eingesetzt. Im Allgemeinen wird hier die Hälfte der verfügbaren Positionen für die jeweilige Schaltrichtung eingesetzt. Bei einem Zähnezahlunterschied von 8 Zähnen ergeben sich beispielsweise theoretisch 8 Schaltoptionen sowohl für den inboard-Schaltvorgang als auch für den outboard-Schaltvorgang. Um diese jedoch voneinander ausreichend distanziert anzuordnen werden in diesem Beispielsfall vorzugsweise 4 inboard-Schaltgassen und 4 outboard-Schaltgassen eingesetzt.

Bei kleineren Zähnezahlunterschieden (= Schaltoptionen) und/oder beim Schalten von einem Übergangsritzel sind weitere Anordnungen möglich. Als Beispiel wird mit Bezug auf Figur 5 der Schaltschritt von einem nicht gezeigten Kettenrad mit 15 Zähnen auf ein gerichtetes Kettenrad mit 18 Zähnen erläutert. "Gerichtet" bedeutet hier, dass die Antriebskette in vorbestimmter Kettenlaschen-Ausrichtung mit dem Kettenrad mit 18 Zähnen zusammenwirken sollte, beispielsweise weil letzteres eine Folge von abwechselnd angeordneten dicken und dünnen Zähnen aufweist. Aus dem Zähnezahlunterschied ergeben sich 3 Schaltoptionen mit optimaler Tangentialbedingung. Es handelt sich um eine vollständig symmetrische Kettenrad-Kombination (15 Zähne und 18 Zähne, wobei beide Zähnezahlen durch 3 teilbar sind). Um eine ausreichende Distanzierung der Schaltgassen voneinander zu erreichen, wird gemäß Figur 5 an dem Kettenrad 110 nur eine outboard-Schaltgasse 114 eingesetzt. Da es sich um einen Abstieg von einem gerichteten Kettenrad handelt, ist gewährleistet, dass ein solcher Schaltvorgang jedenfalls innerhalb einer Umdrehung vollzogen wird. Bei dem Aufstieg auf das das Kettenrad 110 von dem Kettenrad mit 15 Zähnen dürfen nur selektive Schaltgassen eingesetzt werden, da ein gerichteter Einlauf gefordert ist. Aus diesem Grund werden zwei Schaltgassen 112 für den Aufstieg verwendet, da es sonst zu spürbaren Schaltverzögerungen kommen kann.

Wiederum ist ein Ausschnitt der Kette nur durch einen linienförmigen Kettenlinienverlauf sowie angedeutete Kettenrollen dargestellt.

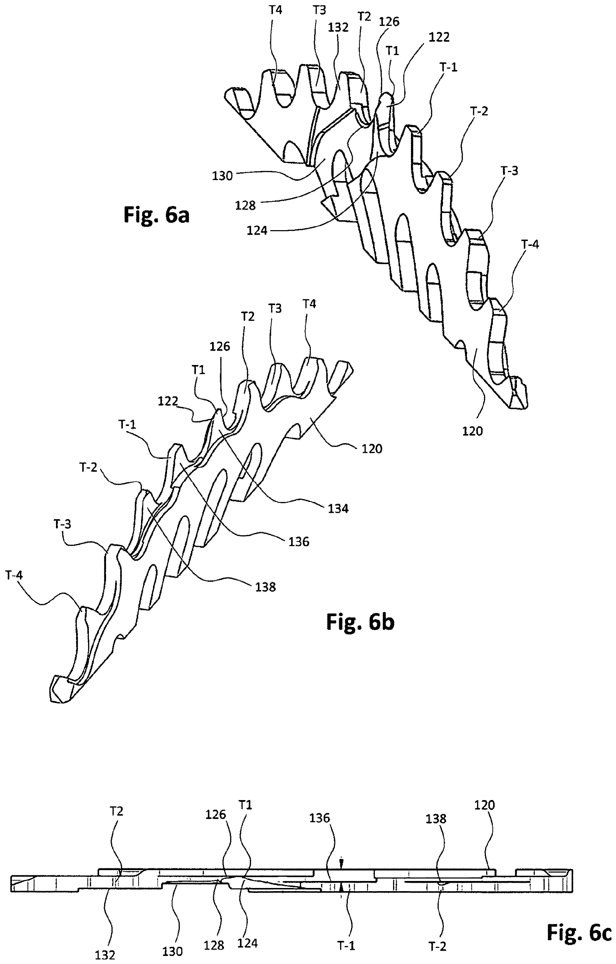

Figuren 6a-6c zeigen eine weitere Ausführungsform der vorliegenden Erfindung, wobei insbesondere auf die Gestaltung einer Schaltgasse für einen outboard-Schaltvorgang eingegangen wird. Die Darstellungen zeigen einen Ausschnitt eines Kettenrades 120 in perspektivischer Ansicht (Figur 6a, 6b), bzw. in Draufsicht (Figur 6c). Dabei soll insbesondere auf die Gestaltung des Referenzzahns T1 und der umliegenden Zähne T-3, T-2, T-1, T2 und T3 eingegangen werden.

Der Referenzzahn T1 weist an seinem Zahnkopf eine Fangfase 122 auf. Frontseitig ist eine frontseitige Innenlaschen-Ausnehmung 124 vorgesehen, wodurch die Materialstärke des Referenzzahns T1 reduziert ist. Im Bereich seiner Lastflanke 126 weist der Referenzzahn T1 eine Außenlaschen-Abweisfase 128 auf, d.h. einen angeschrägten Verlauf der Lastflanke. Dieser erstreckt sich von der Lastflanke 126 entlang bis über den Zahngrund hinweg zu dem nächsten Zahn T2. Unterhalb dieses Bereichs weist das Kettenrad 120 eine weiter zurückgesetzte Außenlaschen-Aussparung 130 auf. Wichtig ist in diesem Zusammenhang, dass die Außenlaschen-Aussparung 130 gegenüber der Innenlaschen-Ausnehmung 124 tiefer in die Frontseite des Kettenrads 120 hinein gearbeitet ist. Dadurch kann zuverlässig eine Außenlasche einer Antriebskette in dieser Aussparung 130 bei einem outboard-Schaltvorgang von dem durchmessergroßen Kettenrad 120 auf ein kleineres Kettenrad aufgenommen werden. Man erkennt ferner, dass an dem Zahn T2 eine frontseitige Ausnehmung 132 vorgesehen ist. Diese ist etwa in derselben Ebene angeordnet, wie die Innenlaschen-Ausnehmung 124. Mit anderen Worten ist die Aussparung 130 gegenüber den beiden Ausnehmungen 124 und 132 tiefer in das Kettenrad 120 eingearbeitet.

Betrachtet man nun die entgegengesetzte Seite des Kettenrads 120 gemäß Figur 6b, so erkennt man die rückseitige Ausnehmung 134 an dem Zahn T1 und eine demgegenüber noch weiter zurückgesetzte rückseitige Ausnehmung 136 an dem Zahn T-1. Diese beträgt gegenüber einem ausnehmungsfreien Zahn von 1,2mm bis zu 1,7 mm. Der Zahn T-2 weist eine weniger stark ausgeprägte rückseitige Ausnehmung 138 auf.

Die rückseitige Ausnehmung 136 an dem Zahn T-1 dient dazu, der Kette genügend Raum zu geben, um beim Schaltvorgang zum kleineren Kettenrad hin ausgelenkt werden zu können. Die Auslenkung muss so weit möglich sein, dass die Fangfase 122 an dem Zahn T1 ein Eingreifen der Innenlasche verhindert bzw. die Innenlasche den Zahn T1 in Richtung des kleineren Kettenrads passiert und damit den Abstiegsvorgang auf das kleinere Kettenrad einleitet. Bei herkömmlichen Kettenrädern genügt an dem Zahn T-1 meist das vorhandene Spiel der Kette bei einem Außenlascheneingriff. Die besonderen Führungseigenschaften des erfindungsgemäßen Kettenrads aufgrund der dicken Zähne, die in breite Kettenglieder eingreifen können, erfordern hier aber den Einsatz der rückseitigen Ausnehmung 136, die erfindungsgemäß eine besonders tiefe Ausprägung hat, beispielsweise bis zu 1.7mm von der Rückseite des Kettenrads gemessen, wie vorstehend bereits angedeutet, im Gegensatz zu bei ca. 0.6mm bei herkömmlichen Kettenrädern aus dem Stand der Technik, sofern an diesem Zahn beim Stand der Technik überhaupt vorhanden.

Die lastflankenseitige Außenlaschenabweisfase 128 gibt der Außenlasche beim Abstiegsvorgang Raum bzw. unterstützt das Abgleiten der Außenlasche vom Lastflankenradius des Zahns T1 und dem zugehörigen Fußkreis. Diese Funktion ist insbesondere wichtig bei der erfindungsgemäßen Ausprägung einer outboard-Schaltgasse mit reduziertem Fußkreisdurchmesser, wie mit Bezug auf Figur 1 beschrieben. Diese Funktion kann aber auch bei Schaltgassen ohne Fusskreisreduktion eingesetzt werden. Dieses Merkmal kann sowohl als Fase 128 als auch als Ausnehmung (nicht gezeigt) ausgeprägt sein.

Die Figuren 7a-7e zeigen eine weitere Ausführungsform der Erfindung, bei der ebenfalls Kettenrad mit wenigstens einem Aufreitzahn 144 vorgesehen ist. Dieser Aufreitzahn 144 ist in den Figuren 7a-7e innerhalb einer Folge von Zähnen 140, 142, 144, 146, 148, dargestellt, wobei die Zähne 140, 144, 148 mit schmalen Kettengliedern 150, 152, 154 in Eingriff stehen. Der Aufreitzahn 144 zeichnet sich dadurch aus, dass er nicht mit größerer Materialstärke ausgebildet ist, sondern in axialer Richtung um eine Distanz x seitlich versetzt ist. Dies erkennt man insbesondere in den Figuren 7a, 7b und 7b.

Durch diesen seitlichen Versatz x, der durch Materialauftrag oder eine versetzte Positionierung erreicht werden kann, kann für den Fall, dass ein schmales Kettenglied 152 auf den Aufreitzahn 144 trifft, wegen dessen seitlich versetzter Positionierung das schmale Kettenglied 152 den Aufreitzahn nicht zwischen seinen beiden Laschen 156, 158 aufnehmen. Stattdessen liegt, wie in den Figuren 7a und 7b gezeigt, die Kettenlasche 156 auf einer schräg verlaufenden Zahnkopf-Fläche 160 auf. Dies bewirkt den gleichen Aufreit-Effekt, wie eingangs mit Bezug auf Figur 2 beschrieben.

Wiederum kann eine Folge von derartigen Aufreitzähnen, beispielsweise eine entsprechende versetzte Positionierung der Zähne 140 und 148, bewirken, dass die Antriebskette über einen längeren Abschnitt nach radial außen verlagert wird, um so eine Korrektur der Kettenlaschen-Ausrichtung durch ein gezieltes Weiterrutschen der Kette um ein Kettenglied zu erreichen. Die Kette trifft dann jeweils mit einem breiten Kettenglied auf den oder die Aufreitzähne. Der seitliche Versatz x ist so gewählt, dass ein breites Kettenglied den Aufreitzahn 144 vollständig aufnehmen kann.

Figur 8 zeigt eine weitere Ausführungsform der Erfindung. Wiederum ist ein Ausschnitt einer Kettenradpaarung aus einem durchmessergroßen Kettenrad 170 und einen durchmesserkleineren Kettenrad 171 gezeigt. Am durchmessergroßen Kettenrad 170 ist eine Folge von Zähnen 172 bis 192 gezeigt, wobei die Zähne 172, 176, 180, 184, 188, 192 als dickere Zähne ausgebildet sind, die für einen Eingriff in breite Kettenglieder vorgesehen sind, wohingegen die Zähne 174, 178, 182, 186, 190 als dünnere Zähne ausgebildet sind, die für einen Eingriff in schmale Kettenglieder vorgesehen sind. Die dicken Zähne 172, 176, 180, 184, 188, 192 haben an ihrer Einlaufflanke jeweils eine Zahnlücken-Ausprägung 194. Je nach Zahnlückenausprägung und Verschleißsituation kann es vorteilhaft sein, den Aufreitzahn 180 jedoch ohne eine einlaufflankenseitige KettenlaschenÜberstandsausnehmung 194 auszubilden. Damit wird die Bruchsicherheit und Verschleißfestigkeit des Aufreitzahnes 180 erhöht.

Figur 8 zeigt diese Ausprägung am durchmessergroßen Kettenrad 170. Das durchmesserkleinere Kettenrad 172 hat Kettenlaschen-Überstandsausnehmungen 196 sowohl an der Last- als auch an der Einlaufflanke.

Figur 9 zeigt eine Darstellung hinsichtlich der Fertigung von Aufreitzähnen. Die Fertigung der Aufreitzähne stellt bei gefrästen Kettenrad-Anordnungen, sogenannten Kettenrad-Clustern, eine besondere Herausforderung dar. Hier kann ein mehrstufiges Verfahren vorgesehen werden, wobei zwei unterschiedliche T-Fräser 200, 202 verwendet werden. Mit einem kleineren Fräser 200 wird der Bereich der Aussparungen um die Zahnflanken des betreffenden Zahnes 204 bearbeitet. Ein Spezialfräser 202 mit größerem Durchmesser und sehr dünnem Schaftbereich komplettiert die Bearbeitung hinter dem Zahn 204.

Die Figuren 10a bis 10f zeigen eine weitere Ausführungsform der Erfindung. Man erkennt auf den 3 Zeichnungsseiten jeweils oben in den Figuren 10a, 10c, 10e eine perspektivische Ansicht einer Anordnung eines durchmessergrößeren Kettenrads 210 und eines durchmesserkleineren Kettenrads 212 und unten in den Figuren 10b, 10b, 10f jeweils eine Seitenansicht dieser beiden Kettenräder. Statt Aufreitzähnen ist am größeren Kettenrad 210 an dessen Frontseite in regelmäßigen Abständen radial einwärts der Zahnformation eine Reihe von Aufreitvorsprüngen 214 vorgesehen, die sich über den Umfang des großen Kettenrads erstrecken. Diese sind so angeordnet, dass sie jedem zweiten Zahn 216 des kleinen Kettenrads 212 zugeordnet sind und auf der Höhe des Zahnkopfes dieser Zähne 216 mit diesem überlappend angeordnet sind. Sie sind in ihrer axialen Erstreckung in Richtung von der Frontseite 218 des großen Kettenrads 210 zu dem kleinen Kettenrads 112 hin, das heißt in ihrer Höhe h, derart ausgebildet, dass sie den Eingriff eines schmalen Kettenglieds mit den Zähnen 216 ermöglichen. Dies ist in den Figuren 10c und 10d in einer Schnittdarstellung für eine Antriebskette 220 gezeigt. Man erkennt, dass die Zähne 216 mit schmalen Kettengliedern 222 in Eingriff stehen, wobei Kettenlaschen 224 zwischen die Zähne 216 und die Aufreitvorsprünge 214 greifen.

Jedoch lassen die Aufreitvorsprünge 214 den Eingriff eines breiten Kettenglieds 226 nicht zu, wie man leicht erkennen kann. Trifft ein breites Kettenglied 226 einer Antriebskette im Falle einer ungewünschten Kettenlaschen-Ausrichtung in der Folge eines Schaltvorgangs auf eine solchen Zahn 216, so liegt dieses breite Kettenglied 226 auf der nach radial außen weisenden Umfangsfläche der Vorsprünge 214 auf und kann mit dem Zahn 216 nicht in Eingriff treten. Die Kette 220 würde dann im Lastfall um die Distanz eines Kettenglieds weiter rutschen und sich so passend ausrichten, dass ein schmales Kettenglied 222 auf einen Zahn 216 trifft und mit seiner Kettenlasche 224 zwischen den Zahn 216 und den Aufreitvorsprung 214 eingreifen kann.

Die Figuren 10e und 10f verdeutlichen dies nochmals für eine nicht geschnitten gezeichnete Kette 220.

Mit dieser Ausführungsform der Erfindung kann eine Kettenausrichtung erfolgen, um so gezielte Schaltvorgänge und einen zuverlässigen Ketteneingriff mit dem Kettenrad durchführen zu können. Dies ist beispielsweise dann von Vorteil, wenn auf das Kettenrad 212 von einem durchmesserkleineren Kettenrad oder dem durchmessergrößeren Kettenrad 210 geschaltet wird, wobei die Kette bei diesem Schaltvorgang in nicht korrekt ausgerichteter Weise auf das Kettenrad trifft. Vorstehend sind verschiedene Ausführungsbeispiele beschrieben, die allesamt Korrekturmittel zeigen, um eine Kette in einer gewünschten Kettenlaschen-Ausrichtung relativ zu einem Kettenrad anzuordnen. Die Korrekturmittel umfassen neben dem beschriebenen Aufreitzahn oder einer Folge von Aufreitzähnen auch die Möglichkeit von Aufreitvorsprüngen, die ebenfalls einzeln oder in einer Folge mehrerer Aufreitvorsprünge angeordnet werden können, sowie die Möglichkeit eines teilweise reduzierten Fußkreisdurchmesser, der separat hiervon oder in Kombination mit Aufreitzähnen oder Aufreitvorsprüngen vorgesehen werden kann, darüber hinaus die gezielte Anordnung von Schaltgassen in Kombination oder separat von den genannten Korrekturmitteln und eine entsprechende vorteilhafte Ausgestaltung des Kettenrads und seiner Zähne im Bereich dieser Schaltgassen. Je nach Bedarf kann eine beliebige Kombination dieser Prinzipien an einer Kettenradanordnung vorgesehen werden.

## Patentansprüche

1. Antriebsanordnung eines Fahrrades mit einer Mehrfach-Kettenradanordnung für eine Hinterradnabe des Fahrrades,
wobei die Mehrfach-Kettenradanordnung eine Mehrzahl an Kettenrädern (10, 50, 80, 110, 120, 170, 171, 210, 212) mit unterschiedlichen Durchmessern umfasst, wobei die Kettenräder jeweils eine Mehrzahl von durch Zahnzwischenräume getrennten Zähnen (T-5, T-4, T-3 bis T3, T4, T5) aufweisen, die mit einer Antriebskette (58) mit wechselweise aufeinander folgenden breiten und schmalen Kettengliedern (60, 62, 64, 66) in Eingriff bringbar sind,
wobei an wenigstens einem Kettenrad ein Korrekturmittel vorgesehen ist, das derart ausgebildet ist, dass die Antriebskette (58) bezüglich ihrer breiten und schmalen Kettenglieder bei einem Umlauf um ein ausgewähltes Kettenrad oder bei einem Kettenradwechsel von einem Ausgangskettenrad auf ein ausgewähltes Kettenrad in einer vorbestimmten Kettenlaschen-Ausrichtung relativ zu den Zähnen des ausgewählten Kettenrads ausgerichtet wird,
**dadurch gekennzeichnet, dass** bei einem Kettenradwechsel von einem Ausgangskettenrad auf ein ausgewähltes Kettenrad eine Folge von Zähnen einen ersten Zahn aufweist, dessen Zahngrund (G1) den Fußkreis (22, 36) des betreffenden Kettenrads (22, 36) tangiert oder radial außerhalb des Fußkreises (22, 36) liegt, wobei wenigstens ein auf den ersten Zahn folgender weiterer Zahn mit seinem Zahngrund (G-1, G-2, G-3, G-4) radial innerhalb des Fußkreises des Kettenrades liegt.

2. Mehrfach-Kettenradanordnung nach Anspruch 1,
wobei am Umfang eines Kettenrads in Umfangsrichtung betrachtet wenigstens eine Folge von Zähnen vorgesehen ist, wobei wenigstens einer der Zähne für einen bevorzugten Eingriff in den Zwischenraum der schmalen Kettenglieder (64, 66) oder für einen bevorzugten Eingriff in den Zwischenraum der breiten Kettengliedern (60, 62) ausgebildet ist, wobei die Folge von Zähnen dazu ausgebildet ist, die Kette korrigierend auszurichten, so dass der wenigstens eine Zahn in den bevorzugten Eingriff in den Zwischenraum der schmalen Kettenglieder oder in den bevorzugten Eingriff in den Zwischenraum der breiten Kettengliedern gelangt.

3. Mehrfach-Kettenradanordnung nach Anspruch 1 oder 2,
wobei die Folge von Zähnen eine Mehrzahl von weiteren Zähnen umfasst, deren Zahngrund (G-1, G-2, G-3, G-4) radial innerhalb des Fußkreises des Kettenrades liegt.

4. Mehrfach-Kettenradanordnung nach Anspruch 3,
wobei die weiteren, mit ihrem Zahngrund (G-1, G-2, G-3, G-4) radial innerhalb des Fußkreises liegenden Zähne der Folge von Zähnen mit zunehmendem Abstand vom ersten Zahn in Umfangsrichtung betrachtet zunehmend weiter radial einwärts innerhalb des Fußkreises (22) des betreffenden Kettenrades (10) angeordnet sind.

5. Mehrfach-Kettenradanordnung nach Anspruch 3 oder 4,
wobei auf den letzten weiteren, mit seinem Zahngrund (G-1, G-2, G-3, G-4) radial innerhalb des Fußkreises (22) liegenden Zahn der Zahnfolge in Umfangsrichtung betrachtet ein Zahn folgt, der mit seinem Zahngrund (G-1) den Fußkreis (22) des Kettenrades tangiert oder radial außerhalb des Fußkreises liegt.

6. Mehrfach-Kettenradanordnung nach einem der Ansprüche 3 bis 5,
wobei benachbart zu dem letzten weiteren, mit seinem Zahngrund (G-1) radial innerhalb des Fußkreises liegenden Zahn der Zahnfolge an dem Kettenrad (10) eine Frontausnehmung (100) zur Ausbildung einer Schaltgasse (84) vorgesehen ist.

## Claims

1. Drive arrangement of a bicycle with a multiple sprocket arrangement for a rear wheel hub of the bicycle, the multiple sprocket arrangement comprising a plurality of sprockets (10, 50, 80, 110, 120, 170, 171, 210, 212) with different diameters, the sprockets each having a plurality of teeth (T-5, T-4, T-3 to T3, T4, T5) which are separated by way of tooth intermediate spaces and can be brought into engagement with a drive chain (58) with wide and narrow chain links (60, 62, 64, 66) which follow one another alternately,
a correction means being provided on at least one sprocket, which correction means is configured in such a way that the drive chain (58) is oriented with regard to its wide and narrow chain links during a circulation around a selected sprocket or in the case of a sprocket change from a starting sprocket to a selected sprocket in a predefined link plate orientation relative to the teeth of the selected sprocket,
**characterized in that**,
in the case of a sprocket change from a starting sprocket to a selected sprocket, a sequence of teeth has a first tooth, the tooth base (G1) of which is tangent on the root circle (22, 36) of the relevant sprocket (22, 36) or lies radially outside the root circle (22, 36), at least one further tooth which follows the first tooth lying with its tooth base (G-1, G-2, G-3, G-4) radially within the root circle of the sprocket.

2. Multiple sprocket arrangement according to Claim 1, at least one sequence of teeth being provided on the circumference of a sprocket as viewed in the circumferential direction, at least one of the teeth being configured for preferred engagement into the intermediate space of the narrow chain links (64, 66) or for preferred engagement into the intermediate space of the wide chain links (60, 62), the sequence of teeth being configured to orient the chain in a corrective manner, with the result that the at least one tooth passes into the preferred engagement into the intermediate space of the narrow chain links or into the preferred engagement into the intermediate space of the wide chain links.

3. Multiple sprocket arrangement according to Claim 1 or 2,
the sequence of teeth comprising a plurality of further teeth, the tooth base (G-1, G-2, G-3, G-4) of which lies radially within the root circle of the sprocket.

4. Multiple sprocket arrangement according to Claim 3, the further teeth of the sequence of teeth which lie with their tooth base (G-1, G-2, G-3, G-4) radially within the root circle being arranged increasingly further radially inwards within the root circle (22) of the relevant sprocket (10) with an increasing spacing from the first tooth as viewed in the circumferential direction.

5. Multiple sprocket arrangement according to Claim 3 or 4,
the last further tooth of the tooth sequence which lies with its tooth base (G-1, G-2, G-3, G-4) radially within the root circle (22) being followed, as viewed in the circumferential direction, by a tooth which is tangent with its tooth base (G-1) on the root circle (22) of the sprocket or lies radially outside the root circle.

6. Multiple sprocket arrangement according to one of Claims 3 to 5,
a frontal recess (100) for configuring a shift gate (84) being provided on the sprocket (10) adjacently with respect to the last further tooth of the tooth sequence which lies with its tooth base (G-1) radially within the root circle.

## Revendications

1. Agencement d'entraînement d'une bicyclette avec un agencement de roues à chaîne multiples pour un moyeu de roue arrière de la bicyclette,
l'agencement de roues à chaînes multiples comprenant une pluralité de roues à chaînes (10, 50, 80, 110, 120, 170, 171, 210, 212) de diamètres différents, les roues à chaîne présentant chacune une pluralité de dents (T-5, T-4, T-3 à T3, T4, T5) séparées par des espaces intermédiaires de dents, qui peuvent être mises en prise avec une chaîne d'entraînement (58) avec des maillons de chaîne (60, 62, 64, 66) larges et étroits se succédant en alternance,
un moyen de correction étant prévu sur au moins une roue à chaîne, qui est configuré de telle sorte que la chaîne d'entraînement (58) est orientée par rapport à ses maillons de chaîne larges et étroits lors d'une rotation autour d'une roue à chaîne sélectionnée ou lors d'un changement de roue à chaîne d'une roue à chaîne de départ à une roue à chaîne sélectionnée dans une orientation prédéterminée des maillons de chaîne par rapport aux dents de la roue à chaîne sélectionnée,
**caractérisé en ce que**
lors d'un changement de roue à chaîne d'une roue à chaîne de départ à une roue à chaîne sélectionnée, une succession de dents présente une première dent dont le fond de dent (G1) est tangent au cercle de base (22, 36) de la roue à chaîne (22, 36) concernée ou est situé radialement à l'extérieur du cercle de base (22, 36), au moins une autre dent suivant la première dent se situant avec son fond de dent (G-1, G-2, G-3, G-4) radialement à l'intérieur du cercle de base de la roue à chaîne.

2. Agencement de roues à chaîne multiples selon la revendication 1, dans lequel au moins une succession de dents est prévue sur la périphérie d'une roue à chaîne, considérée dans la direction périphérique, au moins l'une des dents étant configurée pour une prise préférentielle dans l'espace intermédiaire des maillons de chaîne étroits (64, 66) ou pour une prise préférentielle dans l'espace intermédiaire des maillons de chaîne larges (60, 62), la succession de dents étant configurée pour orienter la chaîne de manière corrective de telle sorte que l'au moins une dent vient dans la prise préférentielle dans l'espace intermédiaire entre les maillons de chaîne étroits ou dans la prise préférentielle dans l'espace intermédiaire entre les maillons de chaîne larges.

3. Agencement de roues à chaîne multiples selon la revendication 1 ou 2, dans lequel la succession de dents comprend une pluralité d'autres dents dont le fond de dent (G-1, G-2, G-3, G-4) est situé radialement à l'intérieur du cercle de base de la roue à chaîne.

4. Agencement de roues à chaîne multiples selon la revendication 3, dans lequel les autres dents de la succession de dents, situées avec leur fond de dent (G-1, G-2, G-3, G-4) radialement à l'intérieur du cercle de base, sont agencées de plus en plus radialement vers l'intérieur à l'intérieur du cercle de base (22) de la roue à chaîne (10) concernée, considéré dans la direction périphérique, au fur et à mesure que la distance par rapport à la première dent augmente.

5. Agencement de roues à chaîne multiples selon la revendication 3 ou 4, dans lequel la dernière autre dent de la succession de dents, située avec son fond de dent (G-1, G-2, G-3, G-4) radialement à l'intérieur du cercle de base (22), est suivie, considérée dans la direction périphérique, par une dent qui avec son fond de dent (G-1) est tangentielle au cercle de base (22) de la roue à chaîne ou est située radialement à l'extérieur du cercle de base.

6. Agencement de roues à chaîne multiples selon l'une quelconque des revendications 3 à 5, dans lequel un évidement frontal (100) est prévu sur la roue à chaîne (10) au voisinage de la dernière autre dent de la succession de dents, située avec son fond de dent (G-1) radialement à l'intérieur du cercle de base, pour former une voie de changement de vitesses (84).
